# EUROPÄISCHE PATENTSCHRIFT

(11) **EP 1 510 373 B1**
(45) Veröffentlichungstag und Bekanntmachung des Hinweises auf die Patenterteilung: **19.12.2007**
(21) Anmeldenummer: 03103220.4
(22) Anmeldetag: 25.08.2003
(51) Int. Cl.: B60G 3/18, B60G 3/20, B60G 3/26, B60G 21/05, B60G 21/00

(54) **Radaufhängung für Fahrzeuge**
Wheel suspension for vehicles
Suspension de roue de véhicule automobile

(43) Veröffentlichungstag der Anmeldung: 02.03.2005
(73) Patentinhaber: Ford Global Technologies, LLC, A subsidary of Ford Motor Company, Dearborn, MI 48126 (US)
(72) Erfinder: Frantzen, Michael Johannes, 52076, Aachen (DE); Ohra-aho, Lauri Mikael, 52074, Aachen (DE)
(74) Vertreter: Drömer, Hans-Carsten

(56) Entgegenhaltungen:
- DE-A- 19 645 343
- DE-U- 20 304 574
- FR-A- 2 616 715
- FR-A- 2 738 190
- GB-A- 2 341 362
- US-B1- 6 481 079
- PATENT ABSTRACTS OF JAPAN vol. 017, no. 172 (M-1392), 2. April 1993 (1993-04-02) & JP 04 331622 A (NISSAN MOTOR CO LTD), 19. November 1992 (1992-11-19)

## Beschreibung

Die Erfindung betrifft eine Radaufhängung an Fahrzeugen mit einem oberen Querlenker und einem unteren Querlenker, die jeweils gegenüberliegend angeordneten Rädern einer Achse zugeordnet sind, wobei der untere Querlenker eines Rades mit dem oberen Querlenker des gegenüberliegenden Rades über ein Verbindungselement, das ein Gelenkmechanismus ist, beweglich verbunden ist.

Derartige Radaufhängungen sind zum Beispiel als SLA-Aufhängungen bekannt. Bei den SLA-Aufhängungen ist der obere Querlenker kürzer als der untere Querlenker. Die Abkürzung SLA bedeutet daher Short-Long-Arm.

Die gattungsgemäße GB 2 341 362 A betrifft eine Radaufhängung für Fahrzeuge. Diese weist Drehachsen an dem jeweiligen oberen und unteren Querlenker auf, die lateral bewegbar sind. Der obere Querlenker ist mit einer Fahrzeugkarosserie über eine drehbar gelagerte Welle verbunden. Diese ermöglicht der Drehachse des oberen Querlenkers sich lateral zu bewegen. Die laterale Bewegung wird mittels diagonaler Kopplungsmittel zwischen der Drehachse und dem unteren Querlenker kontrolliert, um optimale Neigungswinkel zu erhalten.

Die DE 203 04 574 U1 offenbart einen Wankstabilisator für eine zweispurige Fahrzeugachse mit Einzelradaufhängung. Eine erste Radaufhängung ist auf einer ersten Seite eines Fahrzeugrahmens angeordnet. Eine Zweite Radaufhängung ist auf einer der ersten Radaufhängung gegenüberliegenden Seite des Fahrzeugrahmens angeordnet. Beide Radaufhängungen weisen je einen Achsschenkel auf, der an dem jeweils einen Rad der Fahrzeugachse verdrehbar gelagert ist. Beide Radaufhängungen weisen je mindestens einen Querlenker auf, der über ein radseitiges Gelenk gelenkig mit dem jeweiligen Achsschenkel und über ein fahrzeugrahmenseitiges Gelenk gelenkig mit dem Fahrzeugrahmen derart verbunden ist, daß der Querlenker durch eine Ein- bzw. Ausfederbewegung des an dem jeweiligen Achsschenkel gelagerten Rades in seinem fahrzeugrahmenseitigen Gelenk verschwenkbar ist. Ein erster Stabilisatorarm ist fest mit einem der Querlenker der ersten Radaufhängung verbunden. Der erste Stabilisatorarm weist einen Gelenkpunkt auf, der bei einem Ein- bzw. Ausfedern des mit dem ersten Stabilisatorarm wirkverbundenen ersten Rades eine Kreisbewegung durchführt mit einem definierten Wirkradius um das fahrzeugrahmenseitige Gelenk des Querlenkers, an dem der erste Stabilisatorarm befestigt ist. Ein zweiter Stabilisatorarm ist fest mit einem der Querlenker der zweiten Radaufhängung verbunden. Der zweite Stabilisatorarm weist einen Gelenkpunkt auf, der bei einem Ein- bzw. Ausfedern des mit dem zweiten Stabilisatorarm wirkverbundenen zweiten Rades eine Kreisbewegung durchführt mit einem definierten Wirkradius um das fahrzeugrahmenseitige Gelenk des Querlenkers, an dem der zweite Stabilisatorarm befestigt ist. Ein Koppellenker verbindet beide Stabilisatorarme an deren Gelenkpunkten verschwenkbar miteinander und überträgt eine Ein- bzw. Ausfederbewegung des ersten Rades auf das zweite Rad und umgekehrt.

Die FR-A-2 616 715 offenbart eine Radaufhängung mit oberen und unteren Querlenkern. Der obere Querlenker jedes Rades ist mit der Fahrzeugkarosserie über einen Arm verbunden, der mit dem unteren Querlenker des anderen Rades einen Hebel bildet. Der obere Querlenker erstreckt sich nach oben von dem Gelenk des Hebels weg.

Die Patentzusammenfassung der japanischen Patentanmeldung 04331622 offenbart erste und zweite Aufhängungsmittel, die von einer Fahrzeugkarosserie mit Tragmitteln getragen werden. Die Stabilität von einem Isolierkörper ist geringer als die Stabilität eines anderen Isolierkörpers. Beide Aufhängungsmittel sind über Verbindungsmittel miteinander verbunden.

Derartige Radaufhängungen haben sich in der Praxis bewährt und bewirken, daß die Seitenneigung des Rades bezogen auf eine Fahrbahn auf einem konstanten Wert gehalten wird, um das Seitenkraftpotential und den Seitenkraftkontakt des Rades zu maximieren und um den Reifenverschleiß zu minimieren. Während paralleler Radbewegung, soll sich die Radneigung relativ zu der Fahrbahn so wenig wie möglich ändern. Andererseits ist es erforderlich, daß bei einem Fahrzeugwanken während Kurvenfahrten eine relativ große Radsturzänderung während Federbewegungen auftritt, um die Fahrzeugwankung zu kompensieren und um das Seitenkraftpotential zu maximieren.

Ein Hauptnachteil der bekannten SLA-Aufhängungen ist darin zu sehen, daß beide Anforderungen nicht gleichzeitig vollständig erfüllt werden können. Die Aufhängungskinematik ist notwendigerweise ein Kompromiß zwischen den beiden sich entgegenstehenden Anforderungen. Eine sogenannte Starrachse erfüllt zwar diese beiden Bedingungen hat aber bekanntermaßen andere Nachteile.

Im allgemeinen wird ein relativ großer Bauraum benötigt wird, um die Radbewegung aufzunehmen. Zudem weisen die bekannten Radaufhängungen eine große ungefederte Masse und Probleme mit dem sogenannten "Achsentrampeln" auf. Das Achsentrampeln wird als Drehvibration der Achse um die Fahrzeuglängsachse definiert.

Bekannt sind aber auch aktive Systeme, die den Radsturz hydraulisch oder elektrisch einstellen. Diese Systeme sind jedoch sehr teuer und weisen Zuverlässigkeitsprobleme auf.

Der Erfindung liegt die Aufgabe zugrunde, eine verbesserte Radaufhängung zur Verfügung zu stellen, mit der das Fahrzeugwanken durch eine Radsturzänderung ausgeglichen wird, wobei ein konstanter Radsturz während paralleler Radbewegung aufrechterhalten wird.

Erfindungsgemäß wird dies dadurch erreicht, daß der Gelenkmechanismus einen Steg, einen Kipphebel, der zwei Schubstangen verbindet und drei Gelenke aufweist, wobei das innere Ende des oberen Querlenkers mit einem Ende der Schubstange in einer Gleitführung gelagert ist.

Damit wird eine verbesserte Radaufhängung zur Verfügung gestellt, mit welcher der Konflikt zwischen den beiden Anforderungen aufgehoben wird. Mit der erfindungsgemäßen Ausgestaltung wird ermöglicht, eine Fahrzeugwankung mittels einer Radsturzänderung während entgegengesetzter Radbewegung auszugleichen, wobei ein konstanter Radsturz bei paralleler Radbewegung aufrechterhalten wird.

Der Erfindung liegt die Erkenntnis zugrunde, daß Kurvenkräfte hauptsächlich von dem unteren Querlenker aufgenommen werden, wobei der obere Querlenker dazu verwendet wird, den Radsturz zu steuern.

Als parallele Radbewegung wird ein gleichzeitiges Einfedern oder Ausfedern der an einer Achse gegenüberliegend angeordneten Räder definiert. Als entgegengesetzte Radbewegung wird ein Ausfedern des einen Rades und ein Einfedern des dazu gegenüberliegenden Rades definiert.

Weitere vorteilhafte Ausführungen der Erfindung sind in den Unteransprüchen offenbart und in der folgenden Figurenbeschreibung beschrieben. Es zeigen:
- Fig. 1: eine Ansicht entlang einer Fahrzeuglängsachse einer ersten Ausführungsform der Radaufhängung,
- Fig. 2: eine Ansicht entlang einer Fahrzeuglängsachse einer zweiten Ausführungsform der Radaufhängung,
- Fig. 3: eine Ansicht entlang einer Fahrzeuglängsachse einer dritten Ausführungsform der Radaufhängung,
- Fig. 4: eine Ansicht entlang einer Fahrzeuglängsachse einer vierten Ausführungsform der Radaufhängung,
- Fig. 5: eine Ansicht entlang einer Fahrzeuglängsachse einer fünften Ausführungsform der Radaufhängung.

In den unterschiedlichen Figuren sind gleiche Teile mit denselben Bezugszeichen versehen, weswegen diese in der Regel auch nur einmal beschrieben werden.

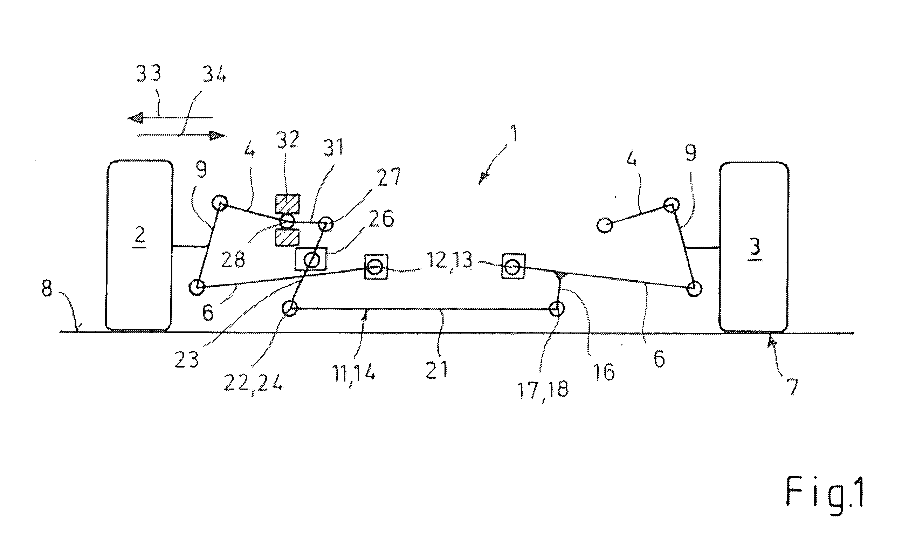

Figuren 1 bis 5 zeigen eine Radaufhängung 1 an Fahrzeugen mit einem, jedem Rad 2,3 zugeordneten oberen Querlenker 4 und unteren Querlenker 6. Die Räder 2,3 sind zueinander gegenüberliegend angeordnet, wobei das Rad 2 beispielhaft an einer Fahrerseite und das Rad 3 beispielhaft an einer Beifahrerseite des Fahrzeugs angeordnet ist. Selbstverständlich kann diese beispielhafte Zuordnung auch umgekehrt gewählt werden.

Die Räder 2,3 stehen mit einer Kontaktfläche 7 auf einer als durchgezogenen Linie dargestellten Fahrbahn 8 in Kontakt.

Die beiden Querlenker 4 und 6 sind einem Radträger 9 in bekannter Weise zugeordnet. Der obere Querlenker 4 ist kürzer ausgestaltet als der untere Querlenker 6.

Der untere Querlenker 6 des Rades 3 ist mit dem oberen Querlenker 4 des dazu gegenüberliegenden Rades 3 über ein Verbindungselement 11 beweglich verbunden. Die Figuren 1 bis 5 zeigen aus Übersichtsgründen jeweils lediglich eine Verbindung. In den jeweiligen Figuren 1 bis 5 ist der untere Querlenker 6 an der Fahrzeugkarosserie oder an einem Hilfsrahmen befestigt. Ein jeweiliger Befestigungspunkt 12 ist mittels eines Quadrates dargestellt. Der Befestigungspunkt 12 ist vorzugsweise an einem vom Radträger 9 weggerichteten Befestigungsende 13 des unteren Querlenkers 6 angeordnet.

In den in Figuren 1 bis 5 dargestellten Ausführungsbeispielen ist das Verbindungselement 11 als Gelenkmechanismus 14 ausgestaltet.

In einem ersten Ausführungsbeispiel nach Figur 1 ist an dem unteren Querlenker 6 ein Steg 16 in Richtung zur Fahrbahn 8 angeordnet. Der untere Querlenker 6 ist einstückig mit dem Steg 16 hergestellt. Der Steg 16 kann aber auch als separates Bauteil an dem unteren Querlenker 6 befestigt sein. Hierzu kann der Steg 16 mit dem unteren Querlenker 6 beispielsweise stoffschlüssig verschweißt oder kraftformschlüssig verschraubt sein.

An einem in Richtung zur Fahrbahn 8 orientierten Ende 17 des Steges 16 ist ein erstes Gelenk 18 angeordnet, so daß eine Schubstange 21 mit dem ersten Gelenk 18 beweglich mit dem unteren Querlenker 6 über den Steg 16 verbunden ist. Die Schubstange 21 erstreckt sich im wesentlichen parallel zu einer Fahrzeugquerachse. An dem zweiten Gelenk 22 ist ein Kipphebel 23 mit einem Gelenkende 24 angeordnet. Etwa in der Mitte des Kipphebels 23 ist dieser mit der Fahrzeugkarosserie oder mit einem Hilfsrahmen beweglich verbunden. Diese bewegliche Verbindung ist mittels des Quadrates 26, in dem ein Kreis eingezeichnet ist dargestellt.

Ein zum zweiten Gelenk 22 gegenüberliegendes drittes Gelenk 27 ist in etwa auf der selben Höhe angeordnet, wie ein inneres Ende 28 des oberen Querlenkers 4. An dem dritten Gelenk 27 ist eine weitere Schubstange 31 angeordnet, die den Kipphebel 23 mit dem inneren Ende 28 des oberen Querlenkers 4 beweglich verbindet. Das innere Ende 28 sowie die damit verbundene Schubstange 31 sind in einer Gleitführung 32 gelagert. Die Gleitführung 32 ist an der Fahrzeugkarosserie oder einem Hilfsrahmen befestigt.

Der Gelenkmechanismus 14 aus Figur 1 weist somit den Steg 16, den Kipphebel 23, der die beiden Schubstangen 21 und 31 verbindet sowie die drei Gelenke 18,22 und 27 auf, wobei das innere Ende 28 des oberen Querlenkers 4 mit einem Ende der Schubstange 31 in der Gleitführung 32 gelagert ist.

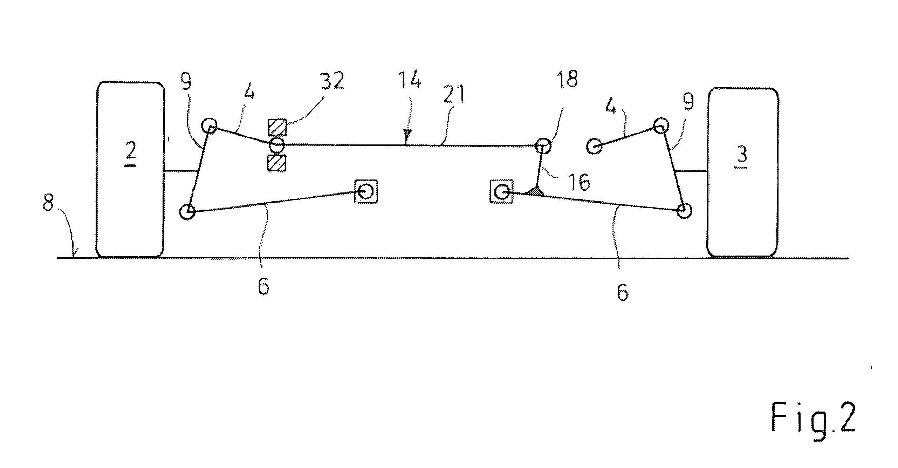

In einem zweiten Ausführungsbeispiel nach Figur 2 ist der Steg 16 im Unterschied zu Figur 1 von der Fahrbahn 8 weggerichtet. Der Steg 16 ist vorzugsweise derart ausgebildet, daß sich das erste Gelenk 18 bezogen auf die Fahrbahn 8 auf der selben Höhe des inneren Endes 28 des oberen Querlenkers 4 befindet. Selbstverständlich kann sich das Gelenk 18 auch oberhalb oder unterhalb des inneren Endes 28 des oberen Querlenkers 4 befinden. Aufgrund dieser Ausgestaltung kann auf den Kipphebel 23 zum Höhenausgleich verzichtet werden, weswegen auch auf die Gelenke 22 und 27 verzichtet werden kann.

Der Gelenkmechanismus 14 nach Figur 2 weist somit den Steg 16, der die Schubstange 21 mit dem oberen Querlenker 6 verbindet sowie das Gelenk 18 auf, wobei das innere Ende 28 des oberen Querlenkers 4 mit einem Ende der Schubstange 21 in der Gleitführung 32 gelagert ist

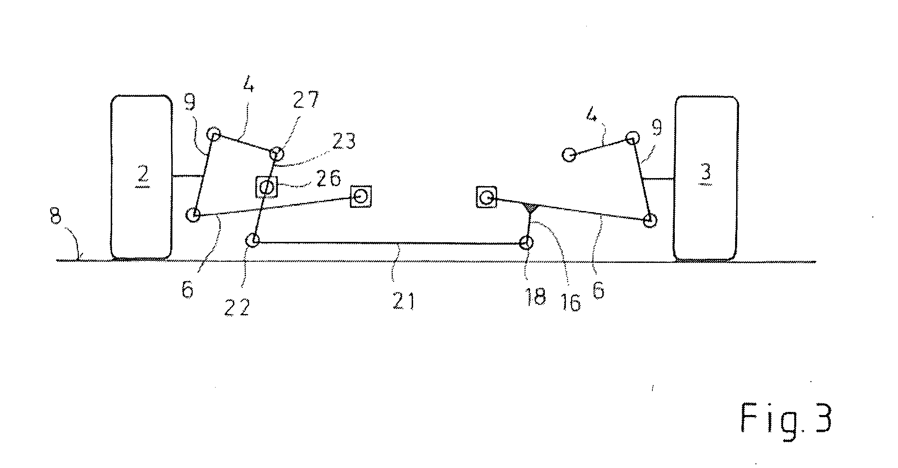

In einem in Figur 3 dargestellten dritten Ausführungsbeispiel ist die Schubstange 21 etwas länger ausgebildet als in dem ersten Ausführungsbeispiel nach Figur 1. Zwischen den beiden Gelenken 22 und 27 ist der Kipphebel 23 angeordnet, der die Schubstange 21 direkt mit dem inneren Ende 28 des oberen Querlenkers 4 verbindet. Der Kipphebel 23 ist ähnlich zu dem ersten Ausführungsbeispiel nach Figur 1 ausgerichtet. Etwa in der Mitte weist der Kipphebel 23 wie in Figur 1 eine Befestigung zur Fahrzeugkarosserie oder zum Hilfsrahmen auf. Im Unterschied zu den Ausführungsbeispielen nach den Figuren 1 und 2 ist die Verbindung mit dem oberen Querlenker 4 nicht in einer Gleitführung gelagert.

Der Gelenkmechanismus 14 aus Figur 3 weist somit den Steg 16, den Kipphebel 23, der die Schubstange 21 mit dem oberen Querlenker 4 verbindet sowie die drei Gelenke 18,22 und 27 auf, wobei das innere Ende 28 des oberen Querlenkers 4 über das dritte Gelenk 27 mit dem Kipphebel 23 verbunden ist.

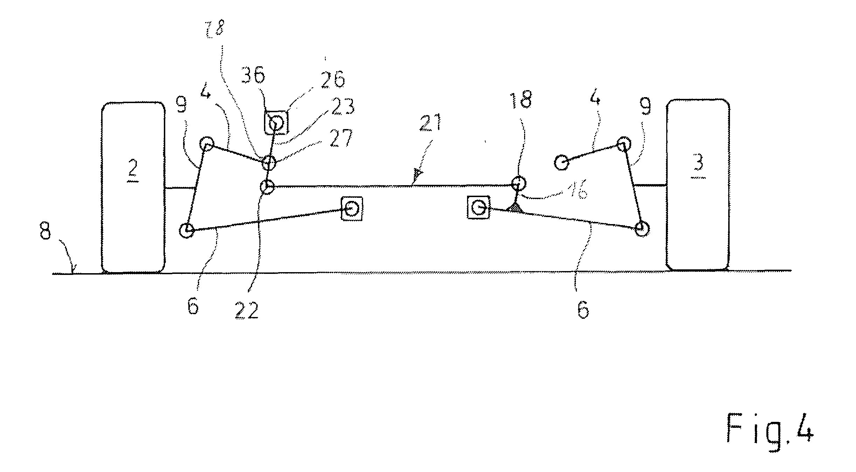

Ein viertes Ausführungsbeispiel ist in Figur 4 dargestellt. Hierbei ist der Steg 16 wie in Figur 2 von der Fahrbahn 8 weggerichtet. Im Unterschied zu Figur 3 ist der Befestigungspunkt des Kipphebels 23 an seinem von der Fahrbahn 8 weggerichteten Ende 36 angeordnet. Zwischen dem zweiten Gelenk 22 und dem Befestigungspunkt 36 ist das dritte Gelenk 27 an dem Kipphebel 23 angeordnet. Mit dem dritten Gelenk 27 ist wiederum der obere Querlenker 4 verbunden.

Der Gelenkmechanismus 14 aus Figur 4 weist somit den Steg 16, den Kipphebel 23, der die Schubstange 21 mit dem oberen Querlenker 4 verbindet sowie die drei Gelenke 18,22 und 27 auf, wobei das innere Ende 28 des oberen Querlenkers 4 über das dritte Gelenk 27 mit dem Kipphebel 23 verbunden ist.

Bei den beiden Ausführungen nach den Figuren 1 bis 4 bewirkt der Gelenkmechanismus 14 eine Querverschiebung des oberen Querlenkers 4.

Während paralleler Radbewegung drückt die Bewegung des unteren Querlenkers 6 den karosserieseitigen Befestigungspunkt 28 des gegenüberliegenden oberen Querlenkers 4 über den Gelenkmechanismus 14 nach Außen. Diese nach außen gerichtete Bewegung ist mittels des Pfeils 33 dargestellt. Während entgegengesetzter Radbewegung zieht die Bewegung des Gelenkmechanismus 14 den Karosserieseitigen Befestigungspunkt des oberen Querlenkers 4 nach innen. Diese Einwärts gerichtete Bewegung ist mittels des Pfeils 34 dargestellt.

Dies führt zu unterschiedlichen Radsturzcharakteristiken während paralleler und entgegengesetzter Radbewegungen. Hierbei wird eine Radsturzänderung zum Ausgleich des Fahrzeugwankens erreicht, wobei ein konstanter Radsturz bei paralleler Radbewegung aufrechterhalten wird.

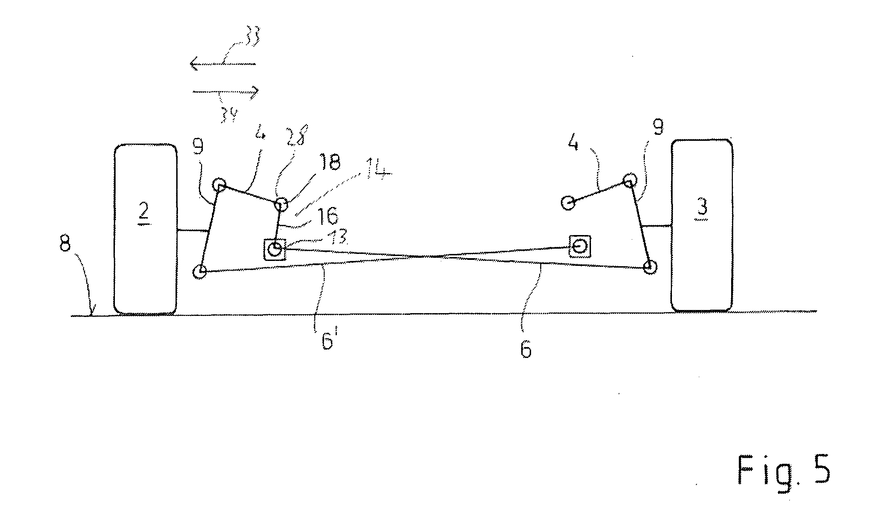

Ein Fünftes Ausführungsbeispiel zeigt Figur 5. Im Unterschied zu den Figuren 1 bis 4 ist der untere Querlenker 6, 6' wesentlich länger ausgebildet. Der untere Querlenker 6 ist derart ausgestaltet, daß dieser mit seinem Befestigungsende 13 näher an dem Rad 2 angeordnet ist als der obere Querlenker 4 mit seinem inneren Ende 28. Die bewegliche Verbindung von dem unteren Querlenker 6 zu dem oberen Querlenker 4 wird hierbei mittels des Gelenkmechanismus 14 bewirkt. Der Gelenkmechanismus 14 weist in dem in Figur 5 dargestellten Ausführungsbeispiel den Steg 16 und das erste Gelenk 18 auf. Das Befestigungsende 13 ist mit der Fahrzeugkarosserie oder einem Hilfsrahmen verbunden. Die beiden unteren Querlenker 6, 6' sind in einer Fahrzeuglängsachse zueinander beabstandet angeordnet.

Während paralleler Radbewegung drückt die Bewegung des unteren Querlenkers 6 den gegenüberliegenden oberen Querlenker 4 über den Gelenkmechanismus 14 nach Außen. Diese nach außen gerichtete Bewegung ist mittels des Pfeils 33 dargestellt. Während entgegengesetzter Radbewegung zieht die Bewegung des Gelenkmechanismus 14 den oberen Querlenker 4 nach innen. Diese Einwärts gerichtete Bewegung ist mittels des Pfeils 34 dargestellt.

Mit den in den Figuren 1 bis 5 dargestellten fünf Ausführungsbeispielen wird eine verbesserte Radaufhängung 1 zur Verfügung gestellt, mit welcher der Konflikt zwischen den beiden Anforderungen aufgehoben wird. Mit der erfindungsgemäßen Ausgestaltung wird ermöglicht, ein Fahrzeugwanken mittels einer Radsturzänderung während entgegengesetzter Radbewegung auszugleichen, wobei ein konstanter Radsturz bei paralleler Radbewegung aufrechterhalten wird.

Die Erfindung ist nicht auf die dargestellten Ausführungsbeispiele beschränkt, sondern umfaßt alle gleichwirkenden Alternativen. Insbesondere ist es möglich, die in den fünf Figuren dargestellten Hebelverhältnisse des Gelenkmechanismus 14 mit anderen Verhältnissen auszubilden. Denkbar ist zum Beispiel, daß der Steg 16 länger oder kürzer ausgebildet wird. Denkbar ist auch, daß der Steg 16 in seiner Lage auf dem unteren Querlenker 6 einerseits in Richtung zum Rad 2 oder andererseits in Richtung zum Rad 3 verschoben wird. Die Hebelverhältnisse des Gelenkmechanismus 14 können zur Abstimmung des Systems herangezogen werden, um die erforderlichen Charakteristiken für alle Betriebszustände zu erreichen. Kennzeichnender Weise führt dies zu einer Minimierung der Radsturzänderung während paralleler Radbewegungen und zu einem Ausgleich des Karosseriewankwinkels während entgegengesetzter Radbewegungen.

## Patentansprüche

1. Radaufhängung an Fahrzeugen mit einem oberen Querlenker (4) und einem unteren Querlenker (6), die jeweils gegenüberliegend angeordneten Rädern (2,3) einer Achse zugeordnet sind, wobei der untere Querlenker (6) eines Rades (2,3) mit dem oberen Querlenker (4) des gegenüberliegenden Rades (2,3) über ein Verbindungselement (11,14), das ein Gelenkmechanismus (14) ist, beweglich verbunden ist,
**dadurch gekennzeichnet, daß**
der Gelenkmechanismus (14) einen Steg (16), einen Kipphebel (23), der zwei Schubstangen (21; 31) verbindet und drei Gelenke (18,22,27) aufweist, wobei das innere Ende (28) des oberen Querlenkers (4) mit einem Ende der Schubstange (31) in einer Gleitführung (32) gelagert ist.

2. Radaufhängung nach einem der vorhergehenden Ansprüche,
**dadurch gekennzeichnet, daß**
der untere Querlenker (6) mit seinem Befestigungsende (13) an einer Fahrzeugkarosserie oder einem Hilfsrahmen befestigt ist.

3. Radaufhängung nach einem der vorhergehenden Ansprüche,
**dadurch gekennzeichnet, daß**
der obere Querlenker (4) kürzer ist als der untere Querlenker (6)

## Claims

1. Wheel suspension on vehicles having an upper transverse link (4) and a lower transverse link (6) which are each assigned to oppositely arranged wheels (2, 3) of an axle, wherein the lower transverse link (6) of a wheel (2, 3) is movably connected to the upper transverse link (4) of the opposite wheel (2, 3) via a connection element (11, 14) which is a linkage mechanism (14), **characterized in that** the linkage mechanism (14) has a bridging piece (16), a tilting lever (23), which connects two push rods (21; 31), and three joints (18, 22, 27), wherein the inner end (28) of the upper transverse link (4) is mounted in a sliding guide (32) with one end of the push rod (31).

2. Wheel suspension according to Claim 1, **characterized in that** the lower transverse link (6) is fastened by its fastening end (13) to a vehicle body or to an auxiliary frame.

3. Wheel suspension according to one of the preceding claims, **characterized in that** the upper transverse link (4) is shorter than the lower transverse link (6).

## Revendications

1. Suspension de roue de véhicule automobile, comportant un bras latéral supérieur (4) et un bras latéral inférieur (6), qui sont respectivement associés à des roues opposées (2, 3) d'un essieu, dans laquelle le bras latéral inférieur (6) d'une roue (2, 3) est relié de façon mobile au bras latéral supérieur (4) de la roue opposée (2, 3) par un élément de liaison (11, 14), qui est un mécanisme articulé (14), **caractérisée en ce que** le mécanisme articulé (14) comprend une entretoise (16), un levier pivotant (23) qui relie deux bielles (21; 31), et trois articulations (18, 22, 27), dans laquelle l'extrémité intérieure (28) du bras latéral supérieur (4) est supportée dans un guidage glissant (32) avec une extrémité de la bielle (31).

2. Suspension de roue selon la revendication 1, **caractérisée en ce que** le bras latéral inférieur (6) est fixé par son extrémité de fixation (13) à une carrosserie de véhicule ou à un châssis auxiliaire.

3. Suspension de roue selon l'une quelconque des revendications précédentes, **caractérisée en ce que** le bras latéral supérieur (4) est plus court que le bras latéral inférieur (6).
